# EUROPEAN PATENT SPECIFICATION

(11) **EP 3 538 047 B1**
(45) Date of publication and mention of the grant of the patent: **29.01.2020**
(21) Application number: 17868715.8
(22) Date of filing: 10.11.2017
(51) Int. Cl.: A61G 3/06, A61G 3/00

(54) **DISABLED ACCESS SYSTEM FOR VEHICLES**
BEHINDERTENZUGANGSSYSTEM FÜR FAHRZEUG
SYSTÈME D'ACCÈS POUR PERSONNES HANDICAPÉES POUR VÉHICULES

(30) Priority: 14.11.2016 TR 201616336; 02.01.2017 TR 201700015
(43) Date of publication of application: 18.09.2019
(73) Proprietor: Ozdemir, Ataman, 06800 Ankara (TR)
(72) Inventor: Ozdemir, Ataman, 06800 Ankara (TR)
(74) Representative: Kayahan, Senem
(86) International application number: PCT/TR2017/050562
(87) International publication number: WO 2018/088983

(56) References cited:
- WO-A1-92/21532
- US-A- 4 133 437
- US-A- 4 664 584

## Description

### Technical Field of the Invention

The invention is related to"disabled access system for vehicles" that can be used indoors and outdoors, that enables disabled people that use wheelchairs to climb into land vehicles such as SUV, minibus, midibus, bus, truck, pick-up, van and other similar vehicles and also air and sea vehicles such as planes, helicopters, boats and yachts, where the boarding part is lower or higher than the ground level. Such a system is disclosed in the WO9221532.

### Known State of the Art

In daily life, vehicles are widely used to travel from one place to another. However, disabled people who want to and even who have to use private or public vehicles cannot use these vehicles without help. The reason is that there is no implementation for such a system in standard production motor vehicles for disabled people in order to ensure that the production costs of such vehicles are reduced. The systems that enable disabled people to climb in or get out of motor vehicles can usually be installed to vehicles later on.

Disabled lifts are one of the applications that enable disabled people to climb into motor vehicles. Mechanical ramps cannot be used for helping disabled people to climb into vehicles due to space they take up. Therefore, lifts are used which need a maintenance budget, since their initial set-up cost is high and they need a certain operating budget. However, there are many design parameters due to the requirements such as the system should not take up too much space, it should be durable, it should not require any modifications and frequent maintenance in the vehicle into which they are mounted. However, many disabled lifts in the market are far from being applicable due to the complexity of the driving and lifting mechanisms, the high installation and maintenance costs as they require certain modifications to be made in the vehicle.

In the systems of the known state of the art, when the disabled person wants to climb into a vehicle, it causes both a waste of time and a difficulty for both the driver and the disabled person since the system is usually used by the vehicle driver or others. Besides, all other systems are complicated systems that are hard to install on the vehicle which are produced with several number of components. At the same time, they have several components; undesirable noise may start in the vehicle in due course. In general, the vertical column system present in the other systems hinders the rear view when not in use.

The document GB2488921 that is in the same technical field as the system of the invention is related to a cassette type disabled lift. The invention of said document is related to driving the arm. Said invention, drives the arm directly by a piston. Therefore, joints of the carrier elements are overloaded. Moreover, in order make the platform reach the distance desired by the lift, the platform is extended for an additional force. Thus, the lift of said invention has an overly complicated structure.

The utility model application numbered DE202012000642 of the known state of the art is related to a disabled lift driven by an arm.

The document numbered WO2012164290A2 is related to a disabled lift axially driven with double arms where the arms are rotated by chains.

In the conducted research, patent documents Numbered US 5433 581, US 5605 431 and US 6357992 are determined. Systems described in these documents are applications with multiple parts that are complicated and costly to produce. Since they have multiple parts and are complicated, undesired sounds/noises can form because the vehicle they are installed into is constantly on the move. The system developed by this invention is a system that is extremely simple, has a small number of parts and occupies minimum space in the vehicle.

In the inventions entitled "Disabled access system for vehicles" Numbered TR 2014/02624 and 2015/16199 developed by the inventor of this invention as well (divided applications) cassette type and ramp type systems are described. The system explained in these applications occupies too much space when at higher position in the vehicle. Moreover, since the motion in the vehicle requires a skid and a bearing system, naturally the weight of the system increases.

In none of the disabled access system examples for vehicles described in all of the documents stated above in relation to the known state of the art, 90 degrees of rotating motion cannot be performed to take the wheelchair of the disabled person into the vehicle after it is lifted. In this invention, since the rotating motion is performed, the number of parts in the system is reduced, total weight is reduced, the cost is lowered and it is enabled to drive the entire system with less power.

### Object and Brief Description of the Invention

During development of disabled access system for vehicles, it is aimed to provide a disabled access system according to claim 1, that enables disabled people who use wheelchairs and who cannot access a certain height to get in motor vehicles, that has a simple structure which can be used anywhere with an elevation difference, that is easy to use, that does not require frequent maintenance, that is resistant against unexpected loads and that has a low initial set-up and operation cost.

The system developed by this invention is a system that can be easily mounted into and dismounted from vehicles and that provides convenience. Movement capability of the mechanism is increased by manufacturing with as few parts as possible. Rear view capability is maximized and the rear view of the driver is not restricted even when the system is not in use. One of the most important innovations of the system is that the disabled person does not need to get help from another person in anyway while getting in the vehicle.

The system comprises the vertical column that can make rotational motion and that enables the system to be installed in the vehicle (that can be produced with one or two arms driven from a single center), the platform on which the disabled vehicle will board onto, a horizontal platform support member that carries the horizontal platform and on which the driving members are installed, and parallel arms that drive the horizontal platform in vertical direction and power and motion transmission pistons. Moreover, the system may comprise a mobile ramp that ensures the security of the disabled person. Among the parts that form the system, the parallel arms that provide vertical motion and the motion transmission pistons, rotates the disabled person through a certain rotational motion thanks to the vertical column and the mechanism installed on said column after lifting the disabled person on the platform to the vehicle level. Thus, the disabled person gets in the vehicle easily. The system developed by this invention is more useful when compared to the products produced for achieving the same goal since it comprises fewer parts, occupies less space in the vehicle, does not restrict the rear view when not in use and is lighter. One of the key features of this system is that the disabled person can activate the mechanism through a controller which enables remote controlling without requiring assistance or support of any other person. When the disabled person wants to drive the vehicle himself/herself, he/she can get into the vehicle and proceed to the driving area. At the same time, it is also easier to put the belongings or other loads of the disabled person into the vehicle. In summary, the system of the invention provides better potential and innovation in comparison to all other products since it is lightweight and occupies less space and more importantly as it enables the disabled person to use the system without assistance and at the same time it allows loading the belongings of the disabled person into the vehicle.

The system developed by the invention provides a more economic solution than other products since it can be manufactured by using fewer parts in comparison to other systems produced for being used in vehicles. It also provides a great advantage in terms of vehicle boarding time due to its easy installation and facilitates getting in the vehicle without requiring any assistance. In the vehicles where this system is installed, it is an important advantage in terms of safety that the rear view of the driver is not restricted.

### Definitions of the Figures Describing the Invention

The figures and their related descriptions that are used to further describe the disabled access system for vehicles developed by this invention are as given below.
- Figure 1-: Side view of the system (the platform is at the lower position)
- Figure 2-: Side view of the system (the platform is at the upper position)
- Figure 3-: Side view of the system (the platform is received in the vehicle)
- Figure 4-: Rear view of the system (the platform is at the lower position)
- Figure 5-: Rear view of the system (the platform is at the upper position)
- Figure 6-: Rear view of the system (the platform is received in the vehicle)
- Figure 7-: Side view of the system that comprises a movable floor (the platform and movable floor are at the lower position)
- Figure 8-: Side view of the system that comprises a movable floor (the platform and movable floor are at the upper position)
- Figure 9-: Side view of the system that comprises a movable floor (the platform and the movable floor are at the upper position, the movable floor in the folded position)
- Figure 10-: Side view of the system that comprises a movable floor (the platform and the movable floor are at the upper position, the horizontal platform and the movable floor are received in the vehicle by being rotated 90 degrees)
- Figure 11-: Side view of the system that comprises a movable floor (the platform and the movable floor are at the upper position, the horizontal platform and the movable floor are received in the vehicle by being rotated 180 degrees)
- Figure12-: Rear view of the system that comprises a movable floor (the platform and movable floor are at the lower position)
- Figure 13-: Rear view of the system that comprises a movable floor (the platform and movable floor are at the upper position)
- Figure 14-: Rear view of the system that comprises a movable floor (the platform and the movable floor are at the upper position, the movable floor is in the folded position)
- Figure 15-: Rear view of the system that comprises a movable floor (the platform and the movable floor are at the upper position, the horizontal platform and the movable floor are received the vehicle by being rotated 90 degrees)
- Figure 16-: Rear view of the system that comprises a movable floor (the platform and the movable floor are at the upper position, the horizontal platform and the movable floor are received in the vehicle by being rotated 180 degrees)
- Figure 17-: Top view of the system that comprises a movable floor (the platform and the movable floor are at the upper position, unfolded)
- Figure 18-: Top view of the system that comprises a movable floor (the platform and the movable floor are at the upper position, semi folded)
- Figure 19-: Top view of the system that comprises a movable floor (the platform and the movable floor are at the upper position, fully folded)
- Figure 20-: Top view of the system that comprises a movable floor (the platform and the movable floor are at a partially rotated position horizontally between 0 and 90 degrees when fully folded in the upper position)
- Figure 21-: Top view of the system that comprises a movable floor (the platform and the movable floor are at a horizontally 90 degrees rotated position when fully folded in the upper position)
- Figure 22-: Top view of the system that comprises a movable floor (the platform and the movable floor are at a partially rotated position horizontally between 90 and 180 degrees when fully folded in the upper position)
- Figure 23-: Top view of the system that comprises a movable floor (the platform and the movable floor are at a horizontally 180 degrees rotated position when fully folded in the upper position)
- Figure 24-: Top view of the system that comprises a movable floor (the platform and the movable floor are at an unfolded upper position)
- Figure 25-: Top view of the system that comprises a movable floor (the platform and the movable floor are at a partially rotated position horizontally between 0 and 90 degrees when at an unfolded upper position)
- Figure 26-: Top view of the system that comprises a movable floor (the platform and the movable floor are at a horizontally 90 degrees rotated position when at an unfolded upper position)
- Figure 27-: Top view of the system that comprises a movable floor (after the platform and the movable floor are horizontally rotated 90 degrees, the movable floor is folded towards the horizontal platform support member which supports the horizontal platform)

### The Descriptions of the Components that Form the Invention

The parts and components in the figures that are used to better describe the disabled access system for vehicles developed by this invention are each given reference numbers and these numbers refer to:
1- The vertical column that can make rotational motion by rotating about a vertical axis and that enables installation of the system to the vehicle
2- The horizontal platform on which the disabled vehicle (wheelchair) is placed on
3- The parallel arms that vertically drive the horizontal platform
4- Power and motion transmission pistons that enables motion of the horizontal platform by being driven by the power unit
5- The movable front ramp that ensures the safety of the disabled person
6- The movable rear ramp that ensures the safety of the disabled person
7- Disabled wheelchair
8- Vertical column roller bearing
9- Vertical column rotating mechanism
10- Horizontal platform support member on which the members providing motion to the horizontal platform are mounted and that supports the horizontal platform
11- The junction points (11) of the parallel arm's intermediate connection members.
12- Counter balance springs
13- Intermediate connection member of the parallel arms
14- Front ramp/stopper motion arm
15- Steel rope that drives the rear ramp
16- The member that enables power and motion transmission between the parallel arms
17- The bearings of the member that enables power and motion transmission between parallel arms and of the parallel arms
18- Junction bearings of the member that enables power and motion transmission between parallel arms and the ramp/stopper motion arm
19- End connection of the power and motion transmission pistons that enables motion of the horizontal platform by being driven by the power unit
20- Pulley
21- The spring that enables opening of the rear ramp
22- Power unit
23- The end (23) where the steel rope is connected to the parallel arm
24- The foldable movable floor of the horizontal platform
25- The folding axis of the foldable movable floor

### Detailed Description of the Invention

In this invention, in order to allow wheelchair users to access the inner cabin of the vehicle, the main principle is to take the user along with his/her wheelchair into the vehicle by lifting and rotating the platform, and when the user wants to get out of the vehicle, to let user get out of the vehicle along with his/her wheelchair by first rotating the platform towards outside of the vehicle and lowering it (towards the ground).

The most important (essential for operation) components of the disabled access system for vehicles developed by the invention are;
- The vertical column (1) that enables rotational motion by rotating about a vertical axis and that enables installation of the system to the vehicle
- The horizontal platform (2) on which the disabled vehicle (wheelchair) is placed on
- The parallel arms (3) that provide vertical angular motion to the horizontal platform
- Power unit (22)
- At least one power and motion transmission piston (4) that enables motion of the horizontal platform by being driven by the power unit
- Horizontal platform support member (10) on which the members providing motion to the horizontal platform are mounted on and that supports the horizontal platform
- The junction points (11) of the intermediate connection members (13) that enables connection to the parallel arm
- The member (16) that enables power and motion transmission between the parallel arms which distributes point (concentrated) loads on the system and which provides a load distribution balance
- End connection (19) of the power and motion transmission pistons that enable motion of the horizontal platform by being driven by the power unit
- Counterbalance springs (12) that absorb shock loads in the system in case of uncontrolled situations and at the same time that support relieving the pusher load
- Intermediate connection member (13) of the parallel arms

Power and motion transmission pistons (4) are connected to the member (16) that enables power and motion transmission between parallel arms through the end connection point (19). The pull and push motions of the power and motion transmission pistons (4) are transmitted to the parallel arms (3) by the power and motion transmission member (16).

The vertical column (1) that can perform rotational motion by rotating about a vertical axis and that enables installation of the system to the vehicle, can have one or two arms driven from a single center.

In the case that there are more than one parallel arms (3), the member (16) that provides power and motion transmission between parallel arms is connected to the parallel arms (3) at both sides by the bearings (17) of the power and motion transmission member. There is one more bearing (18) for connection of the front ramp/stopper motion arm (14) at the front of bearing (17) where the member(16) providing power and motion transmission between parallel arms is connected to the lower parallel arm (3).

In order to share the concentrated loads acting on the system and to provide load distribution balance and counter-balancing, the ends of the parallel arms (3) at the vertical column (1) side that enables angular motion of the horizontal platform in vertical direction are extended towards the other side of the vertical column. A parallel arms intermediate connection member (13) is provided between said extended ends of the parallel arms (3). The intermediate connection members (13) of the parallel arms are connected to the parallel arms (3) at junction points (11). Counterbalance springs (12) or shock absorbers are connected to the lower one of the parallel arms (3). The number of counterbalance springs or the shock absorbers can be at least one. Same springs or the shock absorbers can be mounted on the upper parallel arms to absorb the uncontrolled motions and to reduce the lifting load.

The power unit (22) mounted on the vertical column (1) may be a power unit such as a pushing motor, actuator, hydraulic pump screw systems, eccentric cams, pneumatic pushers, gears with reductors and chain and belt systems.

A vertical column roller bearing (8) on at least one end (upper or lower) of the vertical column (1) that can perform circular motion by rotating about the vertical axis and that enables installation of the system on the vehicle is provided. Depending on the application type, the roller bearing (8) may be located at both ends. Bush (plain) bearing or vertical thrust bearing can be used instead of roller bearing.

The vertical column (1) is turned by vertical column rotating mechanism (9). The vertical column rotating mechanism may at least be one of; linear systems, eccentric arms, cam systems, screw type systems, hydraulic or pneumatic cylinders, gear systems, chains or gear steel ropes.

The vertical column (1) side ends of the parallel arms (3) that provide angular motion to the horizontal platform in vertical direction are extended to the other side of the vertical column. Between the extended ends of the parallel arms (3), intermediate connection member (13) of the parallel arms is provided. The parallel arms intermediate connection member (13) is connected to the parallel arms (3) at junction points (11).

The parallel arms intermediate connection member (13) between the vertical column (1) side extended ends of the parallel arms (3) and the counterbalance springs (12) distribute the concentrated loads on the system and provide load distribution balance and counterbalancing.

The number of parallel arms (3) that provide angular motion to the horizontal platform at a vertical direction can be at least one. In case there is one parallel arm (3), the at least one power and motion transmission pistons (4) are directly connected to the parallel arm (3). In this case, the parallel arms intermediate connection member (13) and the member (16) providing power and motion transmission between the parallel arms are not required. The counterbalance springs or the shock absorbers (12) are connected to the vertical column (1) side end of the parallel arms (3).

The other components that facilitate the operation of the disabled access system for vehicles developed by this invention and that provide safety features are;
- The movable front ramp (5) that ensures the safety of the disabled person
- The movable rear ramp (6) that ensures the safety of the disabled person
- Front ramp/stopper motion arm (14)
- Steel rope (15) that drives the rear ramp
- The bearings (17) of the member that enable power and motion transmission between the parallel arms and of the parallel arms
- Junction bearings (18) of the member that enables power and motion transmission between the parallel arms and the ramp/stopper motion arm
- The pulley (20) that enables controlled operation of the steel rope driving the rear ramp
- The spring (21) that enables opening of the rear ramp
- The end (23) where the steel rope is connected to the parallel arm

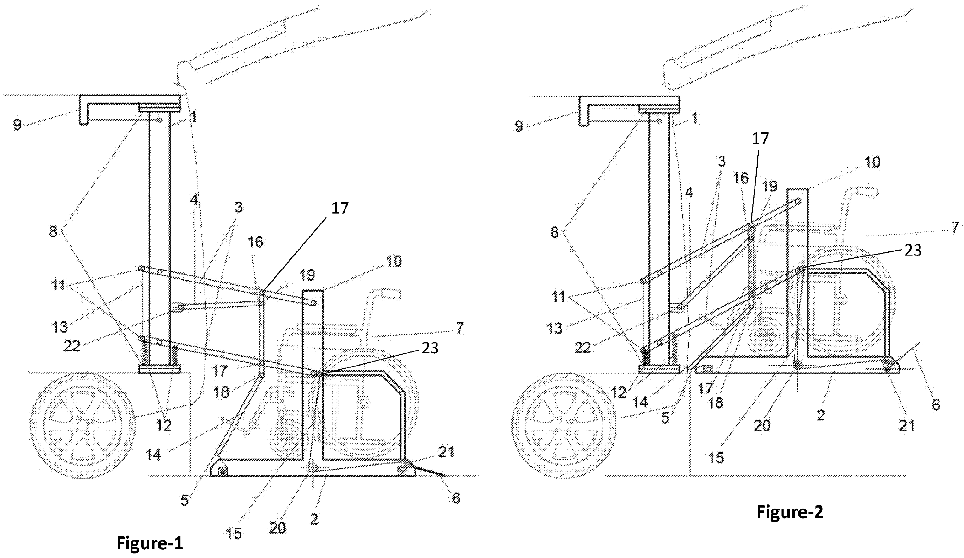

In the disabled access system for vehicles developed by this invention, when in the vehicle without the wheelchair (7) in it, depending on the position of the vehicle, first the tailgate or the side door of the vehicle is opened. Then, the vertical column (1) that can perform a rotational motion by turning about a vertical axis and that enables installation of system to the vehicle is rotated towards the outside of the vehicle at a 90 degree angle by means of the rotating mechanism (9) and the system emerges out of the vehicle. Thus, the system reaches the position shown in Figure 2.

Following this, the power and motion transmission pistons (4) driving the horizontal platform by being powered by the power unit (22) are pulled back by the pulling force of the power unit. Since they are connected to the member (16) providing power and motion transmission between the parallel arms through the end connection (19), the power and motion transmission pistons (4) pull said member (16) back. The end connection (19) where the power and motion transmission pistons (4) are connected to the member (16) providing power and motion transmission between parallel arms are positioned higher than the center of the member (16). In other words, on the member (16), the end connection (19) point is closer to the upper one of the parallel arms (3) that provides vertical angular motion to the horizontal platform. Thus, the parallel arms (3) move downwards by the pulling force of the power unit (2) and they push the horizontal platform support member (10) and the horizontal platform (2) connected to it downwards, such that the horizontal platform (2) is lowered to the ground level. As a result, the system reaches the position shown in Figure 1.

When the horizontal platform (2) is at ground level (Figure 1), the disabled person gets on the horizontal platform (2) with his/her wheelchair (7). In order to lift the system up, this time the power unit (22) performs the operations described above in reverse order.

Depending on the mounting position of the power unit (22) on the vertical column (1) and the connection position of the end connection (19) to the member (16) providing power and motion transfer between the parallel arms, the downward movement of the system may be performed by the pushing force of the pistons (4). This implementation is not shown in the Figures. Accordingly, the power and motion transmission pistons (4) that drive the horizontal platform by being powered by the power unit (22) are moved forward by the pushing force of the power unit. Since the power and motion transfer pistons (4) are connected to the member (16) that provide power and motion transmission between the parallel arms and the end connection (19), they push this member (16) forward. The end connection (19) where the power and motion transmission pistons (4) are connected to the member (16) providing power and motion transmission between the parallel arms is at a lower position than the center of the member (16). In other words, the end connection (19) point is closer to the lower one of the parallel arms (3) that provides vertical angular motion of the member (16) towards the horizontal platform. Thus, the parallel arms (3) move downwards by the pushing force of the power unit (2) and they push down the horizontal platform supporting member (10) and the horizontal platform (2) connected to it, such that the horizontal platform (2) is lowered to the ground level. So, the system reaches the position shown in Figure 1.

When the horizontal platform (2) is at ground level (Figure 1), the disabled person gets on the horizontal platform (2) with his/her wheelchair (7). In order to lift the system up, this time the power unit (22) performs the operations described above in reverse order.

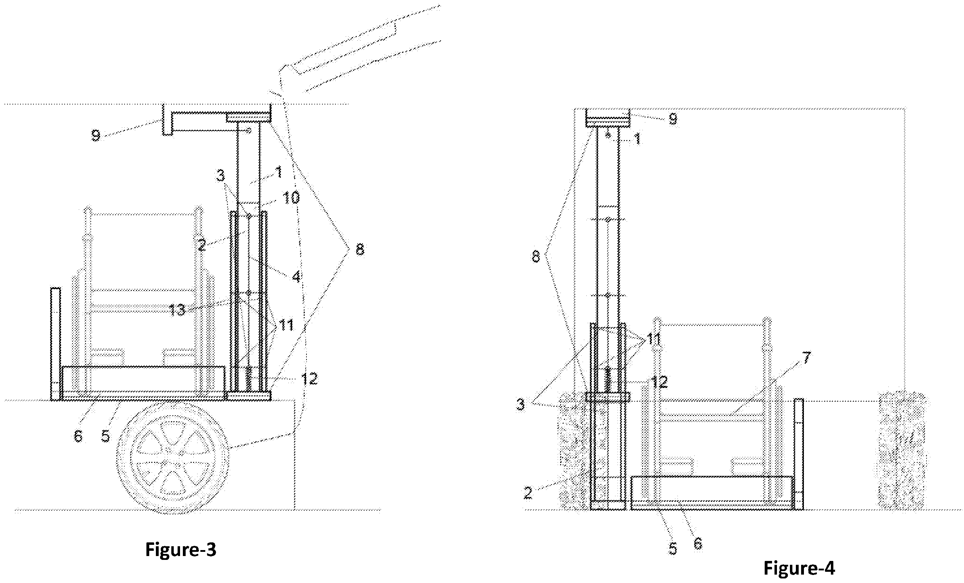

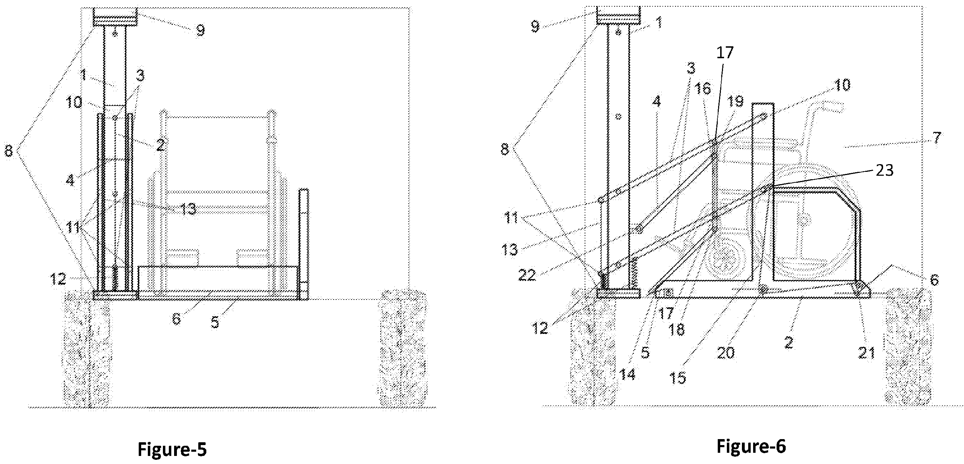

When the system is in the ground level position (Figure 1 and 4), the movable front ramp (5) that ensures the safety of the disabled person is at an upright position. The rear ramp (6) is inclined towards the ground in order to let the wheelchair (7) of the disabled person get on the platform (2). When the system is moved and lifted up from the ground (Figures 1, 3, 5 and 6), the rear ramp (6) becomes upright. When the system is lifted up from the ground and brought to the upper position (level with the internal floor of the vehicle), the movable rear ramp (5) is at an upright position. And the front ramp (6) is inclined towards the ground in order to let the wheelchair (7) of the disabled person to get on or off the platform (2). This motion is enabled as described below.

The rear ramp (6) may be in a form of plate that is half folded at the center or at a location closer to a side. The end of the rear ramp (6) at the platform side is connected to the parallel arm by the steel rope (15). Said connection is at the parallel-arm-connection end (23) of the steel rope. The pulley (20) that provides guidance and that enables controlled operation of the steel rope is located in-between. When the system is at ground level (lower position), the rear ramp (6) is inclined towards the ground in order to let the wheelchair (7) of the disabled person to get on or off the platform (2). As this position can be ensured by the own weight of the ramp (6) (weight of the broad part), the spring (21) is mounted on the short edge of the ramp in order to fix the ramp (6). One end of the spring (21) is connected to the angled part of the platform (2) and the other end is connected to the steel rope (15) through the end of the eccentric arm protruded from the rear ramp (6). Thus, during the rear ramp's (6) transition from the upright stopper position to the ramp function position, the spring serves as a guide.

When the system starts to rise from the ground, while the parallel arm (3) is moving upwards, the end (23) of the steel rope (15) connected to the parallel arm also moves up. Thus, it also pulls the end of the steel rope (15) upwards. Such that, the steel rope (15) horizontally pulls the short edge of the rear ramp (6) it is connected to, at the other end. Thus, the rear wide edge of the rear ramp (6) moves up and brings the ramp (6) to an upright position.

The ramp/stopper motion arm (14) of the front ramp and the member (16) providing power and motion transmission between the parallel arms are connected by the junction bearings (18) of the member providing power and motion transmission between the parallel arms and the ramp/stopper motion arm. When the system is at the ground level (lower position), the front ramp (6) is at an upright position relative to ground in order to prevent the wheelchair (7) of the disabled person from moving out (advancing) of the platform (2). When the system starts its upward motion from the ground, while the parallel arm (3) is moving upwards, the ramp/stopper motion arm (14) moves downwards due to junction bearings (18). Meanwhile, the front ramp (5) becomes inclined through the downward motion of the ramp/stopper motion arm (14). When the system is on the vehicle (upper position), the front ramp (6) is inclined towards the floor in order to let the wheelchair (7) of the disabled person to get in the vehicle from the platform (2).

In the implementation of the disabled access system for large vehicles developed by this invention wherein the disabled person can move inside the vehicle in his/her wheelchair (7), a circular platform that can rotate about its own axis in the middle can be installed on the upper part of the fixed horizontal platform. This circular rotating platform is supported in the middle by a roller bearing or plane (bush) bearing or horizontal thrust bearing on the lower horizontal platform. If required, it can be manufactured as embedded in the lower horizontal platform. Thus, when the horizontal platform is received in the vehicle, the disabled person can rotate the circular rotation of the platform with his/her wheelchair (7) on it and then can move inside the vehicle. The circular rotation platform is immobilized by applying brakes when in motion. This application is not shown in the Figures.

In order to enable the disabled person to use the mechanism without requiring another person's support or assistance while getting in the vehicle, another feature of the above mentioned disabled access system for vehicles is that the system controlling the power unit (22) is a system enabling remote control. Remote control communicates by methods such as RF (Radio Frequency), Bluetooth, WI-FI etc.

The disabled access system for vehicles developed by this invention can be produced such that it can be folded after the disabled person gets in the vehicle with his/her wheelchair (7) and it is positioned at a suitable location inside the vehicle. In other words, the horizontal platform (2) on which the disabled person's vehicle (wheelchair) (7) is located can be foldable. In this case, the horizontal platform (2) on which the disabled person's wheelchair (7) is positioned can be designed such that one side is fixed to the horizontal platform supporting member (10) on which the members driving the horizontal platform are mounted and that supports the horizontal platform, such that it may comprise a foldable movable floor (24) outside the fixed part (2). The foldable movable floor (24) is folded towards the horizontal platform support member (10) by rotating about the folding axis (25).

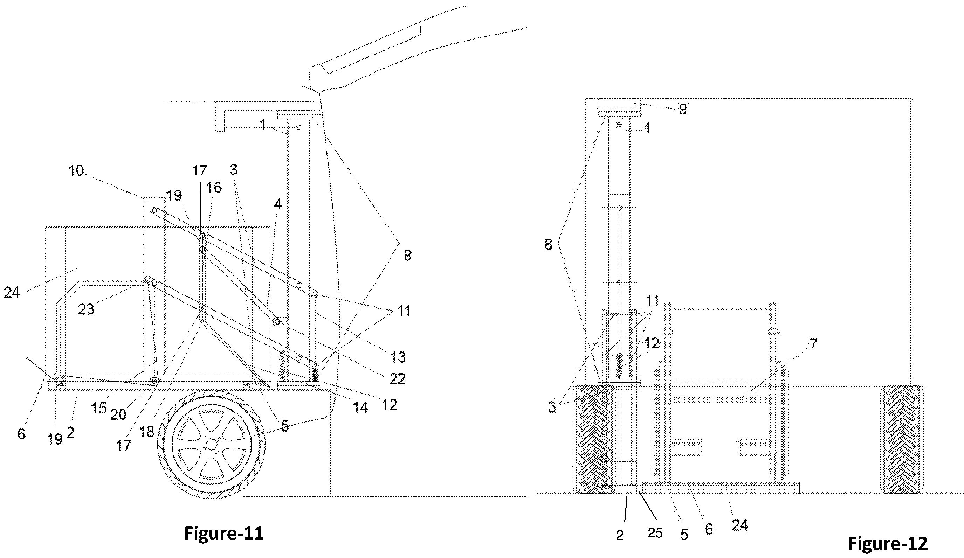

The foldable movable floor (24) and the folding axis (25) are shown in Figures 12, 13, 14, 17 and 18 depicting the rear and top views of the system.

Developed by the invention, the folding operation of the movable floor of the horizontal platform (2) that carries the disabled person's vehicle (wheelchair) is described below.

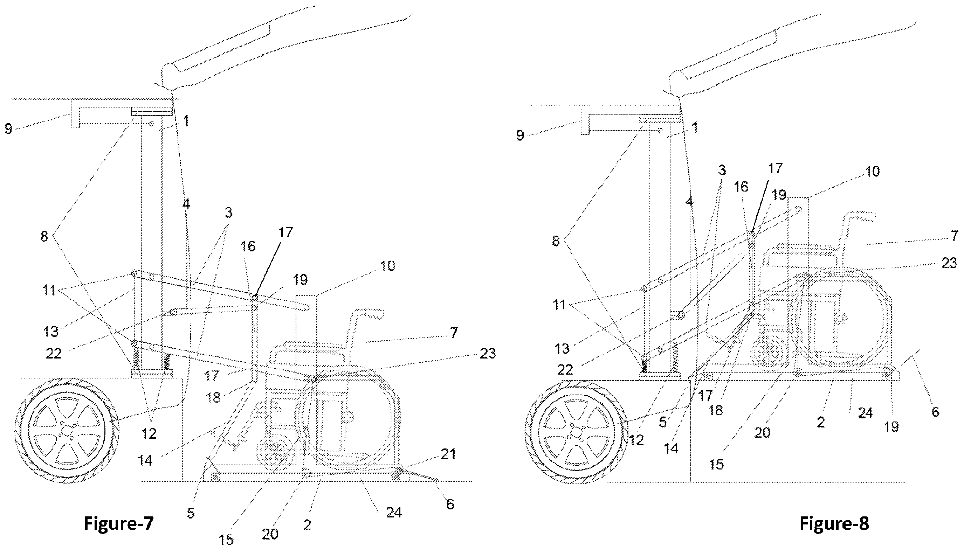

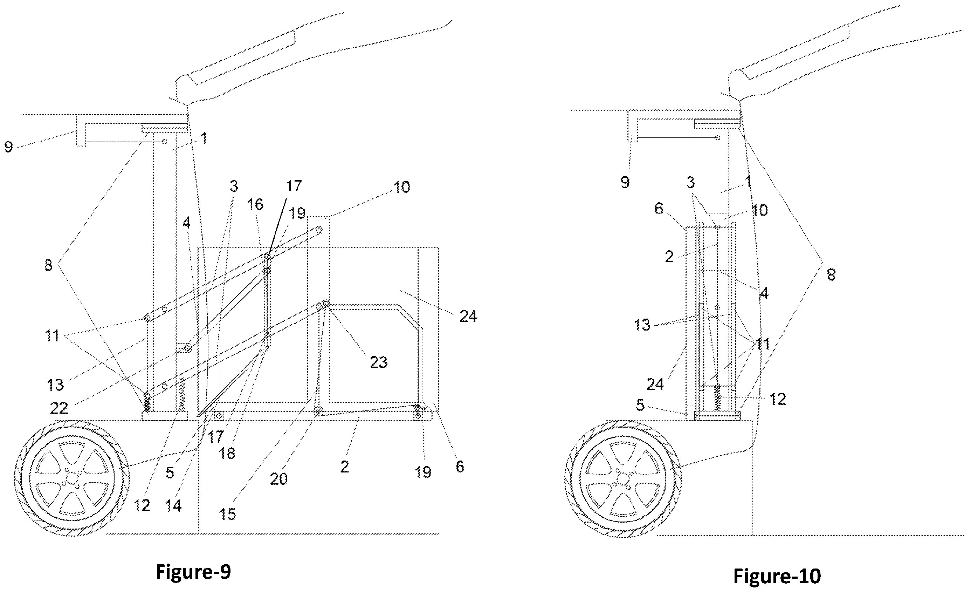

As seen in Figure 7, the disabled person gets on the movable floor (24) of the horizontal platform (2) on the ground with his/her wheelchair (7). As described above, the system lifts up the horizontal platform (2) along with the movable floor (24) and levels it with the floor of the vehicle. When in the position shown in Figure 8, the disabled person advances towards the inside of the vehicle with his/her own chair (7) from the movable floor (24) of the horizontal platform (2). After the disabled person's wheelchair (7) is inside the vehicle, the movable floor (24) of the horizontal platform (2) is folded along the folding axis (25) towards the horizontal platform supporting member (10) on which the members driving the horizontal platform are installed and that supports the horizontal platform. The folded view is shown in Figure 9.

The folding operation can be at least one of, a linear system, eccentric arms, cam systems, screw systems, hydraulic or pneumatic cylinders, gear systems, chain or gear steel ropes.

After the movable floor (24) is folded, the vertical column (1) is rotated 90 degrees by the vertical column rotating mechanism (9) and the horizontal platform (2) and the movable floor (24) are received inside the vehicle as shown in Figure 10. The movable floor is located just inside the rear door of the vehicle in folded position. The system can also be implemented to the side doors of buses.

The vertical column rotating mechanism (9) can be a system such as linear systems, eccentric arms, cam systems, screw systems, hydraulic or pneumatic cylinders, gear systems, chain or gear steel ropes.

In Figure 11, the folded movable floor is shown as positioned inside the vehicle after being rotated 180 degrees. In case of 180 degree rotation, the movable floor is positioned inside the vehicle as folded at the side.

Figure 12 shows the rear view of the system comprising the movable floor when the platform and the movable floor are at the lower position.

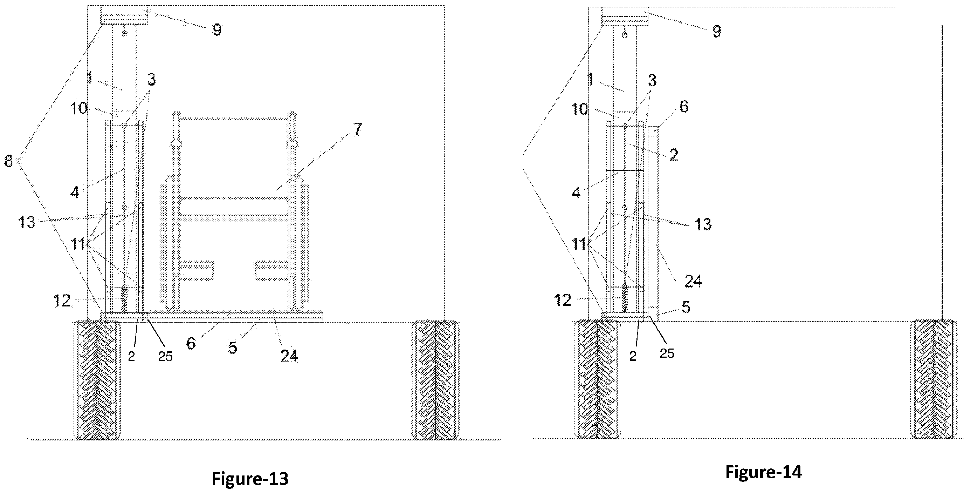

Figure 13 shows the rear view of the system comprising the movable floor when the platform and the movable floor are at the upper position.

Figure 14 shows the rear view of the system comprising the movable floor when the platform and the movable floor are at the upper position and the movable floor is folded. Here, the movable floor (24) is folded about the folding axis (25) towards the horizontal platform supporting member (10) by being rotated 90 degrees with respect to the vertical axis.

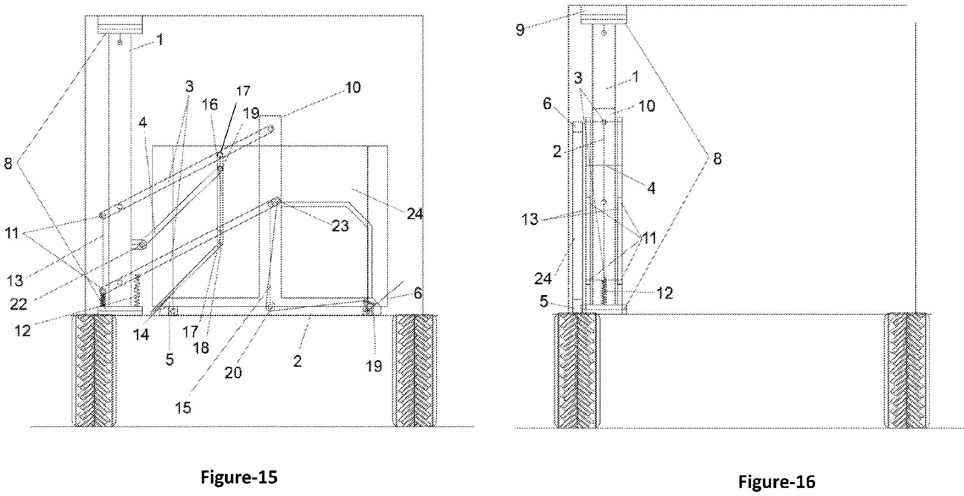

Figure 15 shows the movable floor (24) inside the vehicle after it is folded about the folding axis (25) towards the horizontal platform supporting member (10) by being rotated 90 degrees with respect to the vertical axis and then rotated 90 degrees with respect to the horizontal axis.

Figure 16 shows the movable floor (24) rotated 90 degrees relative to horizontal axis positioned inside the vehicle at a side after being rotated another 90 degrees (180 degrees total).

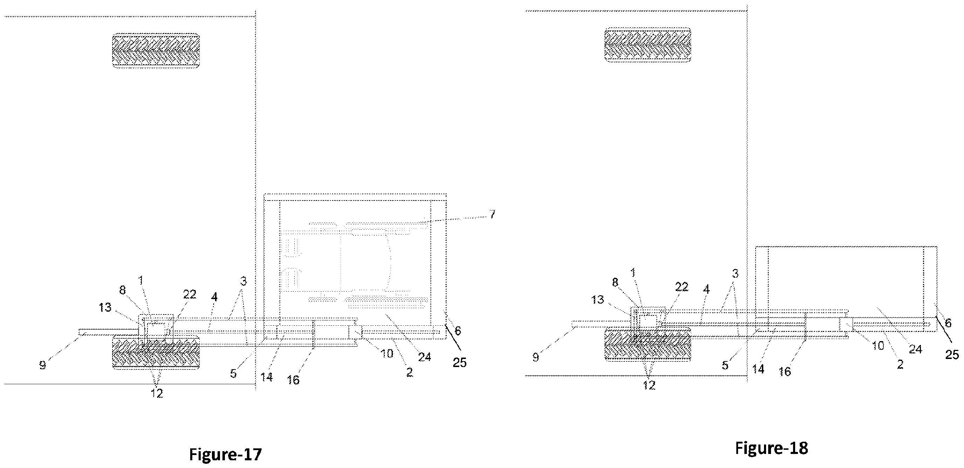

The folding operation of the movable floor (24) of the horizontal platform (2) after the disabled person's wheelchair (7) gets inside the vehicle is shown in Figures 17, 18 and 19.

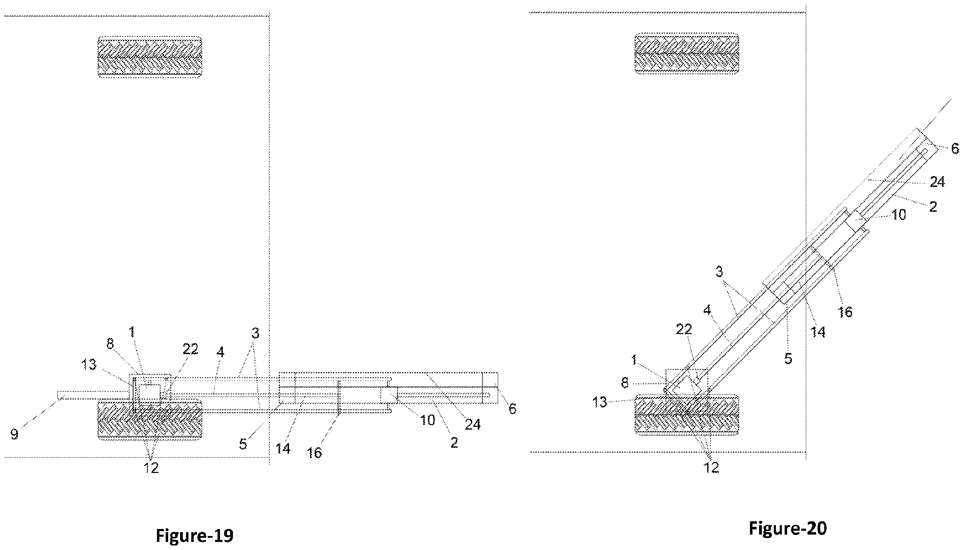

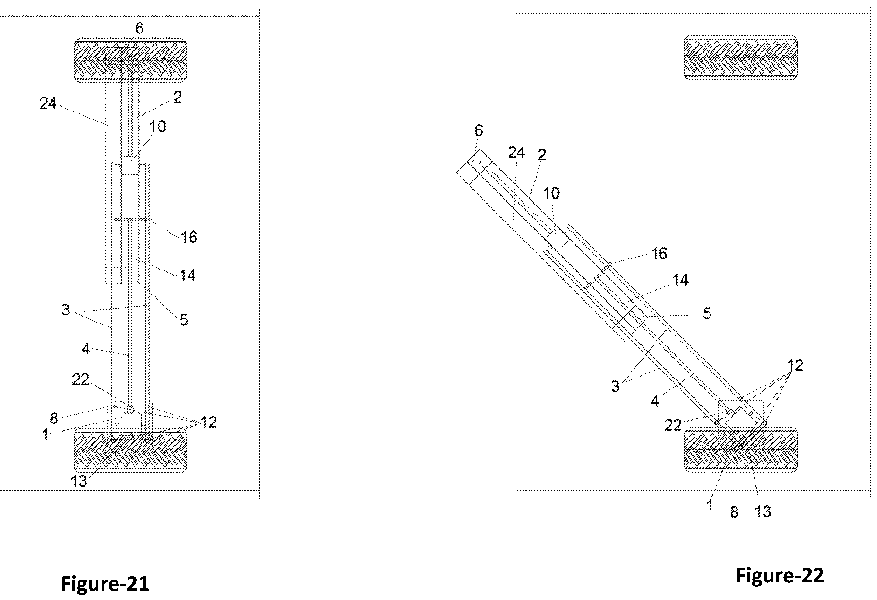

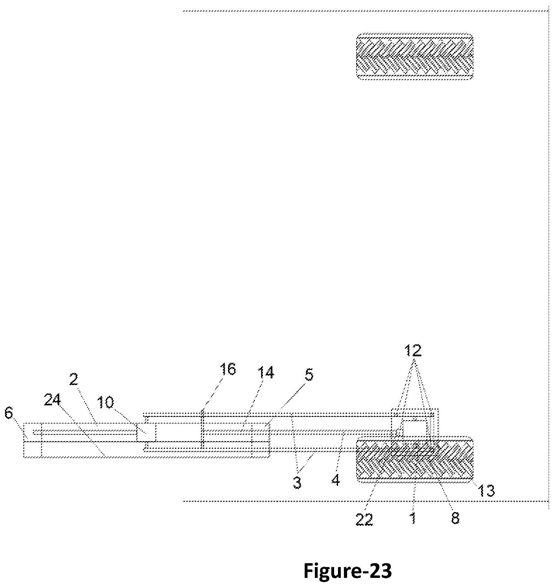

In Figures 20, 21, 22 and 23, the platform and the movable floor are shown at corresponding positions rotated between 0 and 180 degrees when at a fully folded upper position. The horizontal rotating motion is performed by the vertical column rotating mechanism (9) about the vertical column (1).

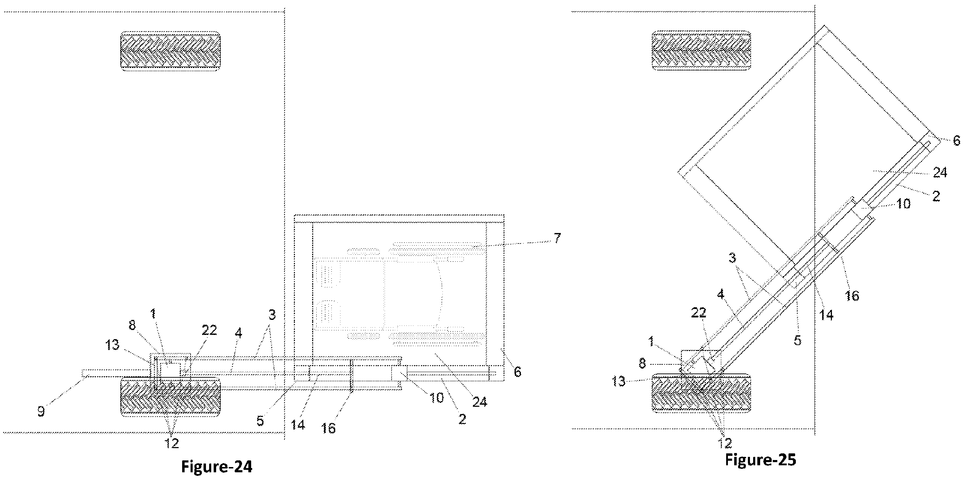

After the wheelchair (7) of the disabled person gets inside the vehicle and the disabled person is secured, the horizontal platform (2) and the movable floor (24) can be rotated by the vertical column rotating mechanism (9) about the vertical column (1) without folding the movable floor (24) of the horizontal platform (2). Figures 24, 25 and 26 shows different positions of this rotation motion.

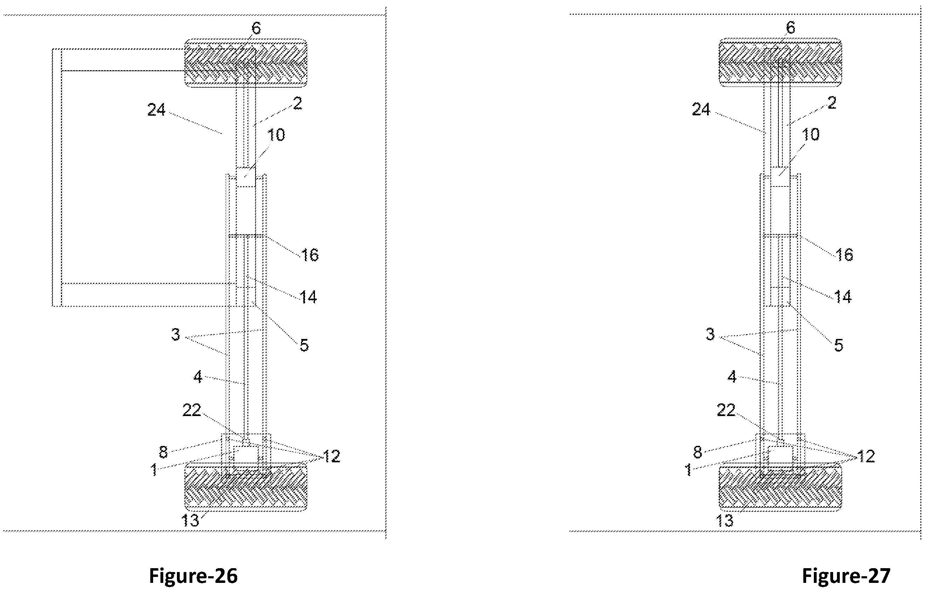

The horizontal platform and the movable floor (24) can be folded inside the vehicle after being taken inside the vehicle in an unfolded state. Figure 27 shows the movable floor (24) at a position folded towards the horizontal platform supporting member (10) supporting the horizontal platform after the platform (2) and the movable floor (24) are rotated 90 degrees horizontally and then taken inside the vehicle. After this stage, the platform (2) and the movable floor (24) can be rotated another 90 degrees and then positioned at a side inside the vehicle.

## Claims

1. A disabled access system for vehicles **characterized in that** it comprises;
• A vertical column (1) that can perform rotational motion by rotating about a vertical axis and that enables installation of the system to the vehicle
• A horizontal platform (2) on which the disabled vehicle wheelchair gets on and a movable floor (24) that can be folded about a folding axis (25),
• At least two parallel arms (3) that provide vertical angular motion to the horizontal platform and intermediate connection member (13) of the parallel arms,
• A power unit (22),
• At least one power and motion transmission piston (4) that enables motion of the horizontal platform by being driven by the power unit,
• A horizontal platform support member (10) on which the members providing motion to the horizontal platform are mounted onto, that supports the horizontal platform,
• Junction points (11) of the parallel arms' intermediate connection members (13) providing connection with the parallel arms,
• A member (16) that enables power and motion transmission between the parallel arms which distributes point (concentrated) loads on the system and which provides load distribution balance,
• End connection (19) of the power and motion transmission pistons that enable motion of the horizontal platform by being driven by the power unit,
• Counterbalance springs (12) that absorb shock loads in the system in case of uncontrolled situations and at the same time that supports reducing the pusher load,

2. Disabled access system for vehicles according to Claim 1 **characterized in that** the horizontal platform (2) on which the disabled person's wheelchair (7) is positioned comprises a part (2) fixed to the horizontal platform support member (10) on which the members driving the horizontal platform are mounted onto and that supports the horizontal platform and the movable floor (24) that can be folded by being rotated about the folding axis (25).

3. Disabled access system for vehicles according to any of the preceding claims **characterized in that** the foldable movable floor (24) comprises at least one of linear systems, eccentric arms, cam systems, screw systems, hydraulic or pneumatic cylinders, gear systems, chain or gear steel ropes to perform folding by being rotated about the folding axis (25).

4. Disabled access system for vehicles according to any of the preceding claims **characterized in that** it comprises a vertical column rotating mechanism (9) that rotates the vertical column (1) in order to enable being received inside the vehicle by being horizontally rotated 90 degrees after the movable floor (24) is folded.

5. Disabled access system for vehicles according to any of the preceding claims, **characterized in that** the vertical column rotating mechanism (9) is at least one of linear systems, eccentric arms, cam systems, screw systems, hydraulic or pneumatic cylinders, gear systems, chain or gear steel ropes.

## Patentansprüche

1. Behindertenzugangssystem für Fahrzeuge, **dadurch gekennzeichnet, dass** es umfasst;
• Eine vertikale Säule (1), die eine Drehbewegung durch Drehen um eine vertikale Achse ausführen kann und die die Installation des Systems am Fahrzeug ermöglicht
• Eine horizontale Plattform (2), auf die der behinderte Fahrzeugrollstuhl aufsteigt, und ein beweglicher Boden (24), der um eine Faltachse (25) gefaltet werden kann,
• Mindestens zwei parallele Arme (3), die der horizontalen Plattform eine vertikale Winkelbewegung bereitstellen, und ein Zwischenverbindungselement (13) der parallelen Arme,
• Eine Krafteinheit (22),
• Mindestens ein Kraft- und Bewegungsübertragungskolben (4), der die Bewegung der horizontalen Plattform ermöglicht, da er vom Krafteinheit angetrieben wird,
• Ein horizontales Plattformstützelement (10), auf dem die Elemente, die der horizontalen Plattform Bewegung bereitstellen, montiert sind, das die horizontale Plattform stützt,
• Anschlusspunkte (11) der Zwischenverbindungselemente (13) der Parallelarme, die eine Verbindung mit den Parallelarmen bereitstellen,
• Ein Element (16), das eine Kraft- und Bewegungsübertragung zwischen den parallelen Armen ermöglicht, das punktuelle (konzentrierte) Lasten auf das System verteilt und eine Lastverteilungsbilanz bereitstellt,
• Endverbindung (19) der Kraft- und Bewegungsübertragungskolben, die eine Bewegung der horizontalen Plattform ermöglichen, da sie vom Krafteinheit angetrieben werden,
• Gegengewichtsfedern (12), die bei unkontrollierten Situationen Schockbelastungen im System aufnehmen und gleichzeitig die Reduzierung der Schuberbelastung stützen.

2. Behindertenzugangssystem für Fahrzeuge nach Anspruch 1, **dadurch gekennzeichnet, dass** die horizontale Plattform (2), auf der der Rollstuhl (7) des Behinderten positioniert ist, einen Teil (2) umfasst, der an dem horizontalen Plattformstützelement (10) befestigt ist, auf dem die die horizontale Plattform antreibenden Elemente montiert sind, und der die horizontale Plattform und den beweglichen Boden (24) stützt, der durch Drehen um die Faltachse (25) gefaltet werden kann.

3. Behindertenzugangssystem für Fahrzeuge nach einem der vorstehenden Ansprüche, **dadurch gekennzeichnet, dass** der faltbare bewegliche Boden (24) mindestens eines von Linearsystemen, Exzenterarmen, Nockensystemen, Schraubensystemen, Hydraulik- oder Pneumatikzylindern, Getrieben, Ketten- oder Zahnradseilen zum Falten durch Drehen um die Faltachse (25) umfasst.

4. Behindertenzugangssystem für Fahrzeuge nach einem der vorstehenden Ansprüche, **dadurch gekennzeichnet, dass** es einen vertikalen Säulen-Drehmechanismus (9) umfasst, der die vertikale Säule (1) dreht, um die Aufnahme im Inneren des Fahrzeugs zu ermöglichen, indem er horizontal um 90 Grad gedreht wird, nachdem der bewegliche Boden (24) gefaltet ist.

5. Behindertenzugangssystem für Fahrzeuge nach einem der vorstehenden Ansprüche, **dadurch gekennzeichnet, dass** der vertikale Säulen-Drehmechanismus (9) mindestens eines von Linearsystemen, Exzenterarmen, Nockensystemen, Schraubensystemen, Hydraulik- oder Pneumatikzylindern, Getrieben, Ketten- oder Zahnradseilen ist.

## Revendications

1. Système d'accès pour handicapés pour véhicules, **caractérisé en ce qu'**il comprend ;
• Une colonne verticale (1) qui peut effectuer un mouvement de rotation en tournant autour d'un axe vertical et qui permet l'installation du système sur le véhicule
• Une plate-forme horizontale (2) sur laquelle monte le fauteuil roulant du véhicule pour handicapés et un plancher mobile (24) qui peut être plié autour d'un axe de pliage (25),
• Au moins deux bras parallèles (3) qui fournissent un mouvement angulaire vertical à la plate-forme horizontale et à l'élément de connexion intermédiaire (13) des bras parallèles,
• Un bloc d'alimentation (22),
• Au moins un piston à transmission de puissance et de mouvement (4) qui permet le mouvement de la plate-forme horizontale en étant entraîné par le bloc d'alimentation
• Un élément de support de plate-forme horizontal (10) sur lequel sont montés les éléments fournissant un mouvement à la plate-forme horizontale, qui supporte la plate-forme horizontale,
• Points de jonction (11) des éléments de connexion intermédiaires (13) des bras parallèles assurant la connexion avec les bras parallèles,
• Un élément (16) qui permet une transmission de puissance et de mouvement entre les bras parallèles qui répartit des charges ponctuelles (concentrées) sur le système et qui assure une répartition équilibrée des charges,
• Connexion d'extrémité (19) des pistons à transmission de puissance et de mouvement qui permettent le mouvement de la plate-forme horizontale en étant entraînée par le bloc d'alimentation,
• Ressorts de contrepoids (12) qui amortissent les chocs dans le système en cas de situations incontrôlées et en même temps soutiennent la réduction de la charge du pousseur.

2. Système d'accès pour handicapés pour véhicules selon la revendication 1, **caractérisé en ce que** la plate-forme horizontale (2) sur laquelle est positionné le fauteuil roulant (7) de la personne handicapée comprend une partie (2) fixée à l'élément de support de plate-forme horizontale (10) sur lequel sont montés les éléments entraînant la plate-forme horizontale et qui supporte la plate-forme horizontale et le plancher mobile (24) qui peut être plié par rotation autour de l'axe de pliage (25).

3. Système d'accès pour handicapés pour véhicules selon l'une quelconque des revendications précédentes, **caractérisé en ce que** le plancher mobile pliable (24) comprend au moins l'un parmi des systèmes linéaires, des bras excentriques, des systèmes à cames, des systèmes à vis, des cylindres hydrauliques ou pneumatiques, des systèmes à engrenages, des chaînes ou des câbles d'acier à engrenages pour effectuer le pliage en étant mis en rotation autour de l'axe de pliage (25).

4. Système d'accès pour handicapés pour véhicules selon l'une quelconque des revendications précédentes, **caractérisé en ce qu'**il comprend un mécanisme de rotation de colonne verticale (9) qui fait tourner la colonne verticale (1) afin de permettre d'être reçue à l'intérieur du véhicule par rotation horizontale de 90 degrés après que le plancher mobile (24) a été plié.

5. Système d'accès pour handicapés pour véhicules selon l'une quelconque des revendications précédentes, **caractérisé en ce que** le mécanisme de rotation de colonne verticale (9) est au moins l'un des systèmes linéaires, des bras excentriques, des systèmes à cames, des systèmes à vis, des cylindres hydrauliques ou pneumatiques, des systèmes à engrenages, des chaînes ou des câbles d'acier à engrenages.
